# EUROPEAN PATENT APPLICATION

(11) **EP 2 857 554 A1**
(43) Date of publication of application: **08.04.2015**
(21) Application number: 13796351.8
(22) Date of filing: 27.05.2013
(51) Int. Cl.: C25B 1/02, C25B 1/00, H01M 8/00, H01M 8/06, H01M 8/12

(54) **ELECTROCHEMICAL REACTOR AND METHOD FOR PRODUCTION OF FUEL GAS**

(30) Priority: 28.05.2012 JP 2012121231
(71) Applicant: Kagoshima University, Kagoshima-shi, Kagoshima 890-8580 (JP)
(72) Inventor: HIRATA, Yoshihiro, Kagoshima-shi Kagoshima 890-8580 (JP); SAMESHIMA, Soichiro, Kagoshima-shi Kagoshima 890-8580 (JP); MATSUNAGA, Naoki, Kagoshima-shi Kagoshima 890-8580 (JP)
(74) Representative: Vossius & Partner
(86) International application number: PCT/JP2013/064679
(87) International publication number: WO 2013/180081

(57) **Abstract**

Electrons are introduced to a cathode (1) side of a cell (10) to promote the reduction of carbon dioxide. On the other hand, the oxidation of methane is promoted in an anode (2) side by an oxide ion transported via a porous GDC electrolyte (3). When carbon monoxide and an oxide ion are generated, they are transported to the anode (2) together with methane gas to generate carbon monoxide and hydrogen. In addition, Cu and an oxide ion are reacted in the anode (2) to promote the oxidation of methane gas.

## Description

### TECHNICAL FIELD

The present invention particularly relates to an electrochemical reactor and a method for producing a fuel gas, which are suitable for use in generating hydrogen and carbon monoxide that can be utilized as a fuel for a solid oxide fuel cell and the like.

### BACKGROUND ART

There have been conventionally made many studies on a fuel-reforming apparatus that provides hydrogen from a gas mainly containing methane gas. Such a fuel-reforming apparatus generally includes four instruments: a desulfurizer, a fuel reformer, a CO shift converter and a CO remover. For example, methane which is main component of a town gas, reacts with water vapor in the fuel reformer to provide carbon monoxide and hydrogen. Then, the generated carbon monoxide and water vapor are further reacted in the CO shift converter to provide carbon dioxide and hydrogen.

Meanwhile, biomass energy has attracted attention as renewable energy. This biomass energy has promise as environment-friendly energy, and biogas generated by methane fermentation in livestock excrement and a sewage plant includes 60% of methane and 40% of carbon dioxide. Such methane and carbon dioxide have been effectively utilized in recent years, and a reforming reaction (dry reforming) generates hydrogen and carbon monoxide according to a reaction of the following formula (1) using a Ni catalyst. Hydrogen and carbon monoxide generated by such a reaction can be utilized as a fuel for a solid oxide fuel cell and the like. In addition, carbon dioxide generated after electric generation is again mixed with biogas to enable a closed system of a fuel to be realized.

CH₄ + CO₂ → 2H₂ + 2CO (1)

When the reforming reaction is performed at 600°C or lower, however, a disproportional reaction in which carbon monoxide is decomposed to carbon dioxide and carbon on the catalyst occurs according to a reaction of the following formula (2). In order to avoid the disproportional reaction, the reforming reaction is required to be performed at a high temperature of 600°C or higher. On the other hand, thermal decomposition of methane progresses at high temperatures according to a reaction of the following formula (3), and carbon precipitated covers the Ni catalyst, thereby causing the deterioration in catalyst ability over time. In addition, carbon precipitated causes blocking of a reaction gas.

2CO → CO₂ + C (2)

CH₄ → 2H₂ + C (3)

As described above, the apparatus for providing hydrogen or the like from a methane-containing gas is complicated in terms of control of the type of a raw material gas and the reaction temperature. In particular, in reforming of water vapor, excessive water vapor is supplied and thus the ratio of water vapor/methane is required to be strictly controlled. In addition, in the fuel-reforming apparatus described above, a high-purity hydrocarbon compound is required to be used as a raw material, and several tens of percent of CO₂ is generated as a by-product. Furthermore, CO that poisons Pt for use in an electrode of a polymer electrolyte fuel cell is required to be reformed to CO₂ and to be removed. Accordingly, this apparatus cannot be said to be suitable for generating hydrogen and carbon monoxide from biomass gas energy.

In addition, a conventional fuel-reforming apparatus has been required to be large in scale because of including a plurality of instruments, and has been difficult to independently operate the instruments from each other. For example, when water vapor is used for both the fuel reformer and the CO shift converter, the ratio of methane to water vapor in the fuel reformer is changed to result in the change of ratio of CO/CO₂ in a gas generated, also correspondingly varying the ratio of H₂O/CO in the CO shift converter. In addition, when liquid water is heated to be formed into water vapor in the reaction, the two instruments are closely related to each other, for example, the heat of combustion of fuel methane is utilized. Therefore, control of a hydrogen-generating process is complicated and the software is also correspondingly complicated to cause an increase in cost.

Then, in order to more effectively generate hydrogen and carbon monoxide, a technique has been proposed in which hydrogen and carbon monoxide are generated from methane and carbon dioxide by means of a redox reaction in an electrode (see, for example, Patent Literature 1).

### CITATION LIST

### PATENT LITERATURE

Patent Literature 1: International Publication Pamphlet No. WO 2009/157454

### NON PATENT LITERATURE

Non Patent Literature 1: Masanobu AWANO, Shingo KATAYAMA, Yoshinobu FUJISHIRO, Sergei BREDIKHIN, and Kunihiro MAEDA, "Development of High Performance Environment Purifying Ceramics," Ceramics, vol. 39, No. 3, pp.199-204 (2004)
Non Patent Literature 2: Koichi SATO, Junji NAKAMURA, Toshio UCHIJIMA, Takashi HAYAKAWA, Tatsuro TSUNODA, and Katsuomi TAKEHIRA, "Conversion to Synthetic Gas by Partial Oxidation of Methane Using Solid Electrolyte Membrane," 74th CATSJ Meeting Abstract, Vol. 36, No. 1B06, pp. 452-455 (1994)
Non Patent Literature 3: F. Y. Wang, G. B. Jung, A. Su, S. H. Chan, X. Hao and Y. C. Chiang, J. Power Sources, 185, 862-866 (2008).
Non Patent Literature 4: T. J. Huang, C. L. Chou, W. J. Chen and M. C. Haung, Electrochem. Commun., 11, 294-297 (2009).
Non Patent Literature 5: I.V. Yentekakis, J. Power Sources, 160, 422-425 (2006).
Non Patent Literature 6: G. Goula, V. Kiousis, L. Nalbandian and I.V. Yentekakis, Solid State Ionics, 177, 2119-2123 (2006).
Non Patent Literature 7: I.V. Yentekakis, T. Papadamand G. Goula, Solid State Ionics, 179, 1521-1525 (2008).
Non Patent Literature 8: S. Sameshima, Y. Hirata, J. Sato and N. Matsunaga, J. Ceram. Soc. Japan, 116, 374-379 (2008).
Non Patent Literature 9: S. Sameshima, Y. Hirata, K. Hamasaki, H. Ohshige and N. Matsunaga, J. Ceram. Soc. Japan, 117, 630-634 (2009).
Non Patent Literature 10: Y. Hirata, Y. Terasawa, N. Matsunaga and S. Sameshima, Ceram. Inter., 35, 2023-2028 (2009).
Non Patent Literature 11: S. Matayoshi, Y. Hirata, S. Sameshima, N. Matsunaga and Y. Terasawa, J. Ceram. Soc. Japan, 117, 1147-1152 (2009).
Non Patent Literature 12: M. Ando, Y. Hirata, S. Sameshima and N. Matsunaga, J. Ceram. Soc. Japan, 119, 794-800 (2011).

### SUMMARY OF THE INVENTION

### TECHNICAL PROBLEM

In the fuel-reforming apparatus described above, the plurality of instruments are closely related to each other, the scale of the apparatus is larger, and control thereof is complicated to cause an increase in cost. Furthermore, an expensive novel metal such as Ru, Pt or Pd is used as a catalyst in such a fuel-reforming apparatus, thereby causing a corresponding increase in cost. Also in the method described in Patent Literature 1, an expensive ruthenium metal is essential for an electrode, and thus a problem is that an electrochemical reactor is expensive.

In view of the above problems, an object of the present invention is to provide an electrochemical reactor and a method for producing a fuel gas, which can inexpensively and effectively generate hydrogen and carbon monoxide from a biogas including methane and carbon dioxide.

### SOLUTION TO PROBLEM

The electrochemical reactor of the present invention is an electrochemical reactor including a cathode electrode that contains nickel, copper or ruthenium, which generates carbon monoxide and an oxide ion from carbon dioxide, a porous electrolyte that allows methane supplied toward the cathode electrode and the oxide ion generated by the cathode electrode to penetrate therethrough, and an anode electrode that contains copper, which generates hydrogen and carbon monoxide from the methane and the oxide ion having penetrated through the electrolyte.

The method for producing a fuel gas of the present invention is a method for producing a fuel gas by using an electrochemical reactor including a cathode electrode that contains nickel, copper or ruthenium, which generates carbon monoxide and an oxide ion from carbon dioxide, a porous electrolyte that allows methane supplied toward the cathode electrode and the oxide ion generated by the cathode electrode to penetrate therethrough, and an anode electrode that contains copper, which generates hydrogen and carbon monoxide from the methane and the oxide ion having penetrated through the electrolyte, including a step of applying a voltage between the anode electrode and the cathode electrode, and a step of supplying a gas including the methane and the carbon dioxide toward the cathode electrode.

### ADVANTAGEOUS EFFECTS OF INVENTION

According to the present invention, hydrogen and carbon monoxide can be generated from a biogas including methane and carbon dioxide in an efficiency equal to that of an electrochemical reactor in which expensive ruthenium is used for an anode.

### BRIEF DESCRIPTION OF DRAWINGS

[Fig. 1] Fig. 1 is a view for illustrating a schematic configuration of an electrochemical reactor provided with a metal catalyst of an embodiment of the present invention.
[Fig. 2] Fig. 2 is a graph showing time dependences of the proportions of methane gas, carbon dioxide, hydrogen and carbon monoxide passing through cell A, and the flow rate of each gas at the outlet side and a current density, in Example 1.
[Fig. 3] Fig. 3 is a diagram showing X-ray diffraction patterns of a cathode 1 and an anode 2 of cell A after a reforming experiment in Example 1.
[Fig. 4] Fig. 4 is a graph showing time dependences of the proportions of methane gas, carbon dioxide, hydrogen and carbon monoxide passing through cell B, and the flow rate of each gas at the outlet side and a current density, in Example 2.
[Fig. 5] Fig. 5 is a graph showing time dependences of the proportions of methane gas, carbon dioxide, hydrogen and carbon monoxide passing through cell C, and the flow rate of each gas at the outlet side and a current density, in Example 3.
[Fig. 6] Fig. 6 is a graph showing the proportions of methane gas, carbon dioxide, hydrogen and carbon monoxide passing through cell D and cell E in Comparative Example.
[Fig. 7] Fig. 7 is a graph showing time dependences of the proportions of methane gas, carbon dioxide, hydrogen and carbon monoxide passing through a cell including a Cu-GDC catalyst, and the flow rate of each gas at the outlet side, in Reference Example.

### DESCRIPTION OF EMBODIMENTS

Hereinafter, an embodiment of the present invention is described with reference to the drawings.

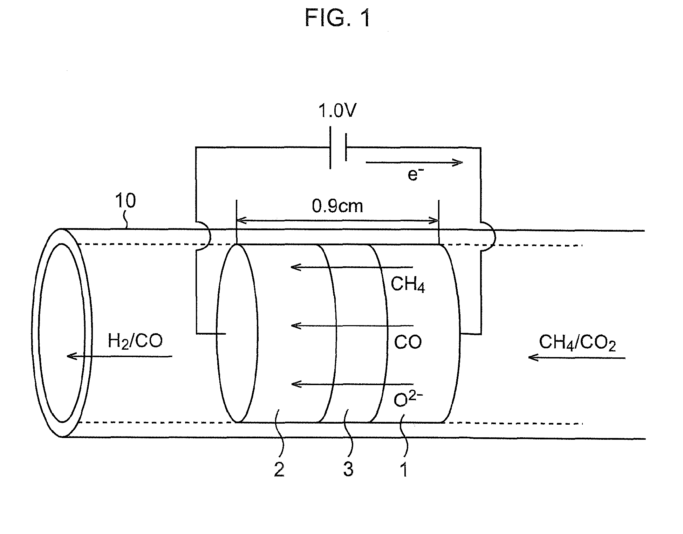

Fig. 1 is a view for illustrating a schematic configuration of an electrochemical reactor provided with a metal catalyst.

As illustrated in Fig. 1, three layers of a cathode 1, a porous electrolyte 3 and an anode 2, each per layer, are formed in a cell 10, and a mixture of copper and GDC (hereinafter, Cu/GDC) is used for the anode 2. GDC here means gadolinium-doped ceria, and is a substance made of Ce_{0.8}Gd_{0.2}O_{1.9}. On the other hand, a mixture of nickel and GDC (hereinafter, Ni/GDC), Cu/GDC, or a mixture of ruthenium and GDC (hereinafter, Ru/GDC) can be used for the cathode 1. Herein, YSZ (yttria stabilized zirconia) may also be used instead of GDC for the cathode 1 and the anode 2. In addition, the thicknesses of the cathode 1 and the anode 2 are each preferably 4 mm to 5 mm.

For example, GDC can be used for the porous electrolyte 3. The thickness of the porous electrolyte 3 is preferably 1 mm or less, and the open porosity of the porous electrolyte 3 is preferably 18% to 55%. If the open porosity is less than 18%, gas cannot be sufficiently passed, and if the open porosity is more than 55%, the strength of the porous electrolyte 3 is difficult to maintain. YSZ can also be used instead of GDC.

Herein, electrochemical reactions of both electrodes illustrated in Fig. 1 are related to each other for the mass balance between an atom and an electron in both the electrodes. That is, the yields of hydrogen and carbon monoxide are controlled by the performance of an electrode having a low reactivity. That is, Cu is used for each anode, and thus the difference between the yields of hydrogen and carbon monoxide is caused due to the reactivity of carbon dioxide in the cathode. The standard Gibbs free energy to oxidation of Ni at 800°C is -138.3 kJ/mol, and the standard Gibbs free energy to oxidation of Cu at 800°C is -88.2 kJ/mol. The standard Gibbs free energy to oxidation of Ni is therefore lower than that of Cu, and thus Ni exhibits a high reactivity with carbon dioxide than Cu. On the other hand, Ru is most expensive among these materials. Therefore, the material for use in the cathode 1 is preferably Ni/GDC.

With respect to the ratio of Ni, Cu or Ru to GDC for use in the cathode 1, the proportion of GDC is preferably 50 to 70% by volume. If the proportion of GDC is less than 50% by volume, sintering of the metal contained progresses, possibly resulting in the decrease in pore size. On the other hand, if the proportion of GDC is more than 70% by volume, a metal particle is prevented from being contacted, causing the decrease in conductivity of the electrode.

With respect to the ratio of Cu to GDC for use in the anode 2, the proportion of GDC is preferably 50 to 70% by volume. If the proportion of GDC is less than 50% by volume, sintering of a copper particle easily progresses. On the other hand, if the proportion of GDC is more than 70% by volume, the conductivity of the electrode is decreased.

According to this electrochemical reactor, electrons are introduced at the cathode 1 side of the cell 10 to promote the reduction of carbon dioxide according to a reaction of the following formula (4). Furthermore, methane gas is partially decomposed to carbon and hydrogen according to the reaction of the formula (3).

CO₂ + 2e⁻ → CO + _{O}²⁻ (4)

If carbon monoxide and an oxide ion are generated according to the reaction of the formula (4), they are transferred through the porous electrolyte 3, which is a mixed conductor of an oxide ion and an electron, to the anode 2 together with methane gas. In the anode 2, methane gas reacts with an oxide ion to generate carbon monoxide and hydrogen according to a reaction of the following formula (5). The reforming efficiencies at 700°C and 800°C here are each increased in the following order with respect to the cathode 1: Cu/GDC, Ru/GDC and Ni/GDC.

CH₄ + O²⁻ → 2H₂ + CO + 2e⁻ (5)

In the anode 2, Cu and an oxide ion are reacted to promote the oxidation of methane gas according to reactions of the following formulae (6) and (7).

2Cu + O²⁻ → Cu₂O + 2e⁻ (6)

Cu₂O + CH₄ → 2Cu + CO + 2H₂ (7)

Then, the respective reactions in the cases of using three cathodes are described.

When Ni/GDC is used for the cathode 1, methane gas is decomposed to generate carbon in the cathode 1 according to the reaction of the formula (3). Then, a nanoparticle of carbon generated is conveyed to the porous electrolyte 3 by a mixed gas to form an electrically conductive path of Ni-C-Cu. On the other hand, in the cathode 1, the oxide ion and the carbon generated in the cathode 1 yield a reaction according to the following formula (8) to remove the carbon.

C + O²⁻ → CO + 2e⁻ (8)

Herein, electrons generated according to the reaction of the formula (8) are transported via the electrically conductive path formed. Thus, depending on the reaction temperature, three parallel reactions occur according to the formulae (3), (4) and formula (8) described above. On the other hand, in the anode 2, Cu₂O is generated according to the reaction of the formula (6) to contribute to the oxidation of methane gas, allowing hydrogen and carbon monoxide to be generated.

The reaction temperature is preferably 800°C or lower because, when the reaction temperature is more than 800°C, the reaction of the formula (3) may further progress to cause carbon to adsorb to the cathode 1, resulting in the decrease in lifetime. In addition, the melting point of Cu is 1083°C, and thus sintering of a Cu particle easily progresses at high temperatures.

On the other hand, when Cu/GDC is used for the cathode 1, Cu is not as high as Ni in terms of affinity with carbon dioxide, and thus the amount of the oxide ion supplied according to the reaction of the formula (4) is not as large as that in the case of Ni, making the reforming efficiency of methane gas slightly poor. If the reaction temperature is more than 800°C, Cu is used for both the cathode 1 and the anode 2 and thus the reaction is easily affected by sintering and grain growth of Cu, resulting in a significant decrease in flow rate of gas in some cases. Accordingly, the reaction is preferably performed at 800°C or lower.

In addition, when Ru/GDC is used for the cathode 1, the decomposition of methane gas according to the reaction of the formula (3) is suppressed, hardly generating carbon. The affinity with CO₂, however, is lower than that in the case of the Ni/GDC cathode, and the reforming efficiency of CH₄ is decreased.

As described above, in the present embodiment, it is not necessary to use a high-purity hydrocarbon compound, and good gas reforming characteristics are exhibited even if 30% to 70% of CO₂ is mixed. That is, a biogas generated in livestock excrement and a sewage plant can be made into a fuel. In addition, the amount of an expensive novel metal such as Ru, Pt or Pd used as a reforming catalyst can be significantly decreased to result in suppression of cost. In addition, it is also possible to be unnecessary for excessive energy as compared with the case of common water vapor-reforming.

### EXAMPLE

Hereinafter, Examples of the present invention are described. Conditions and the like in these experiments are examples adopted for confirming the enablement and the effect of the present invention, and the present invention is not limited to these examples.

### (Example 1)

First, an oxalate precursor (Ce_{0.8}Gd_{0.2})₂(C₂O₄)₃ was heated in the atmosphere at 600°C for 2 hours to prepare a GDC powder of Ce_{0.8}Gd_{0.2}O_{1.9}. Then, the GDC powder was ground by alumina balls having a diameter of 3 mm for 24 hours, and the GDC powder ground was immersed in a mixed liquid of an aqueous 1.4 mol/l Ni (NO₃)₂ solution, an aqueous 1.4 mol/l Cu (NO₃)₂ solution and an aqueous 0.2 mol/l RuCl₃ solution. Then, a suspension of the mixture was stirred for 6 hours, and thereafter lyophilized. Furthermore, the powder lyophilized was placed in the atmosphere, and heated at 600°C to 800°C for 1 hour to prepare a NiO/GDC powder, a CuO/GDC powder and a RuO₂/GDC powder.

Then, in order to prepare cell A shown in Table 1 below, a mixed powder in which Ni : GDC was 3 : 7 (volume ratio) was prepared as a cathode powder layer, and a mixed powder in which Cu : GDC was 3 : 7 (volume ratio) was prepared as an anode powder layer. With respect to the details of the method of adjusting the Ni/GDC powder, the Ni/GDC powder was prepared by any of the methods described in Non Patent Literatures 10 to 12.

Then, a disk-shaped porous GDC powder having a diameter of 10 mm and a thickness of 1 mm was sandwiched between a cathode powder layer having a thickness of 4 mm and an anode powder layer having a thickness of 4 mm, and the resultant was uniaxially pressurized at 100 MPa. Thereafter, the resultant was isotropically pressurized at 150 MPa to prepare a cell including three layers: cathode-porous electrolyte-anode, each per layer. Furthermore, this cell was heated in the air at 900°C for 2 hours to prepare cell A. Herein, the open porosity of each of the cathode 1 and the anode 2 was shown in Table 1.

[Table 1]

**Table 1**

| Cell | Cathode (volume ratio) | Electrolyte | Anode (volume ratio) |
|---|---|---|---|
| | (thickness, open porosity) | (thickness) | (thickness, open porosity) |
| A | 30Ni-70GDC | GDC | 30Cu-70GDC |
| | (4mm, 38%) | (1mm) | (4mm, 32%) |
| B | 30Cu-70GDC | GDC | 30Cu-70GDC |
| | (4mm, 32%) | (1mm) | (4mm, 32%) |
| C | 30Ru-70GDC | GDC | 30Cu-70GDC |
| | (4mm, 40%) | (1mm) | (4mm, 32%) |
| D | 30Ru-70GDC | GDC | 30Ru-70GDC |
| | (4mm, 25%) | (50µm) | (4mm, 25%) |
| E | 30Ni-70GDC | GDC | 30SrRuO₃-70GDC |
| | (4mm, 43%) | (50µm) | (4mm, 36%) |

Then, in order to produce a circuit illustrated in Fig. 1, a Pt mesh, to which a Pt wire was mounted, was mounted to both electrodes (cathode 1 and anode 2) by using a Pt paste. Then, an electrochemical cell was set to an alumina holder, and a glass O-ring was heated at 870°C for 15 minutes for sealing. Herein, the X-ray diffraction pattern of the electrode (cell A) heated at 600°C to 800°C was measured by an X-ray diffraction apparatus (RINT 2200PCH/KG, Rigaku Co., Japan, the same shall apply hereafter), and it was confirmed that while a Ni metal was oxidized, two phases of NiO-GDC co-existed and there was no reactivity with each other.

Then, after cooling to 800°C, in order to reduce the Ni oxide by oxidation to a Ni metal, a hydrogen gas containing 3% by volume of H₂O was supplied to the cathode 1 at 50 ml/min for 24 hours to reduce the Ni oxide to a Ni metal according to a reaction of the following formula (9).

NiO+H₂ → Ni+H₂O (9)

The flow rate was here measured at the outlet side, and it was confirmed that the flow rate of the hydrogen gas containing H₂O was 40 to 48 ml/min at 800°C and also that air permeability was good.

Thereafter, an external voltage of 1 V was applied using a potentiostat (HA-501G, Hokuto Denko Co., Japan), and a mixed gas of methane and carbon dioxide in a ratio of 1 : 1 (volume ratio) was supplied to the cathode 1 at 50 ml/min. The composition of the gas at the outlet side was analyzed with gas chromatograph (GT 3800, Yanaco Co., Japan) using a thermal conductivity detector at 100°C and having active carbon (60/80 mesh), by injecting 0.2 ml of an outlet gas to an Ar carrier gas at 100°C.

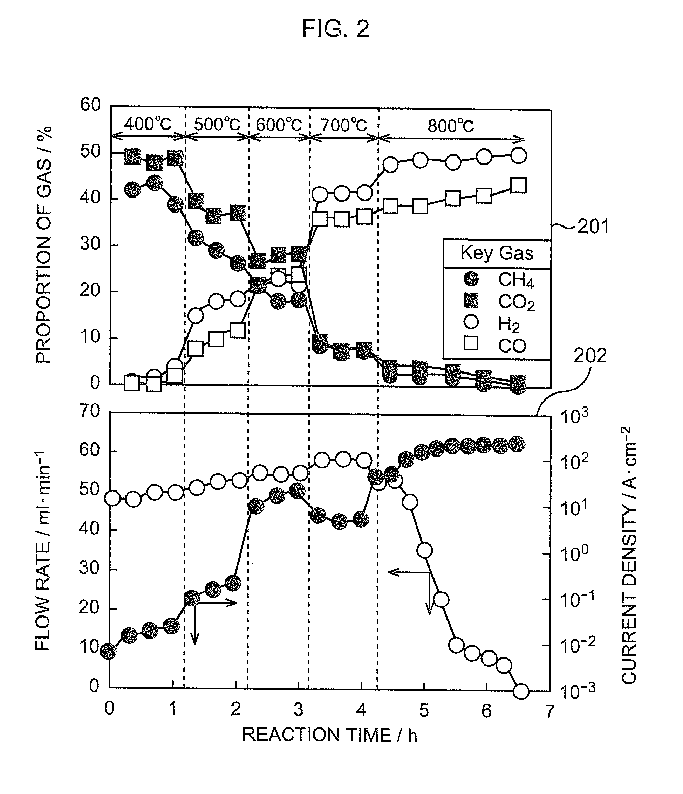

Result 201 in Fig. 2 shows the proportions of methane gas, carbon dioxide, hydrogen and carbon monoxide passing through cell A operated at 1.1 V/cm. As shown in result 201 in Fig. 2, when the ratio of methane gas to carbon dioxide was 1 : 1 at the inlet side, methane gas and carbon dioxide were converted to hydrogen and carbon monoxide in large amounts as the reforming temperature was increased. As a result, with respect to the composition of the gas at the outlet side (% by volume) at a lapse of 2.5 hours after a temperature rise to 800°C, the proportion of methane gas was 1%, the proportion of carbon dioxide was 2%, the proportion of hydrogen was 52%, and the proportion of carbon monoxide was 45%.

Result 202 in Fig. 2 shows time dependences of the flow rate of the gas at the outlet side and the current density. In result 202 in Fig. 2, open circle symbols each show the flow rate of gas, and solid circle symbols each show the current density. As shown in result 202 in Fig. 2, the flow rate of each gas at the outlet side was slightly increased at 400°C to 700°C as the reforming temperature was increased. This result was based on the increase in volume of each gas at the outlet side as represented by the formula (1).

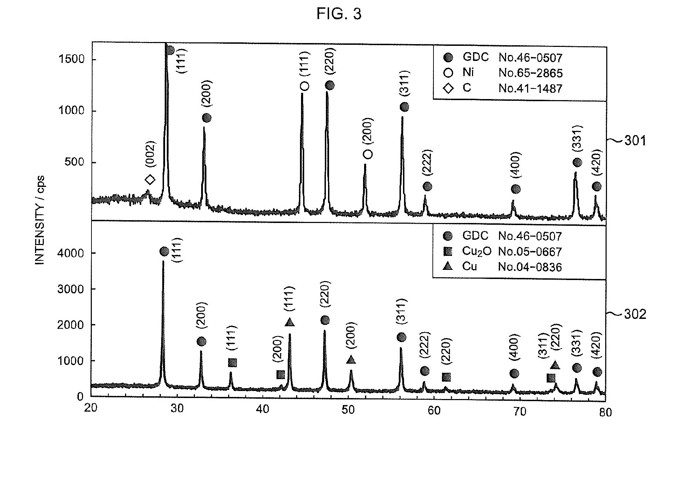

Analysis result 301 in Fig. 3 shows the X-ray diffraction pattern of the cathode 1 of cell A after the reforming experiment, and analysis result 302 in Fig. 3 shows the X-ray diffraction pattern of the anode 2 of cell A after the reforming experiment. As shown in analysis result 301 in Fig. 3, the peak of carbon was observed other than those of Ni and GDC. That is, it is considered that methane gas was decomposed at 800°C at the cathode 1 side to precipitate carbon. On the other hand, as shown in analysis result 302 in Fig. 3, GDC co-existed with Cu and the peak of Cu₂O was also observed in the anode 2. No phase associated with carbon, however, was observed in the anode 2.

From the foregoing, it is suggested that Ni in the cathode 1 promotes the reduction of carbon dioxide according to the reaction of the formula (4) at 800°C and promotes the thermal decomposition of methane gas according to the reaction of the formula (3). It is also suggested that Cu in the anode 2 promotes the oxidation of methane gas according to the reaction of the formula (5) and suppresses the decomposition of methane gas. Furthermore, both of Cu and Cu₂O are generated in the anode 2, and it is thus found that the catalyst reaction according to the formulae (6) and (7) occurs.

On the other hand, as shown in result 202 in Fig. 2, the current density was logarithmically increased at high temperatures. The current density J is associated with the conductivity (σ) and the electric field (E) by a relationship of J = σE. When the electric field E is 1.1 V/cm, the respective current densities J of porous GDC, Ni, Cu and C are calculated and found to be 1.38 × 10⁻¹, 2.42 × 10⁴, 1.35 × 10⁵ and 1.72 × 10³ A/cm², respectively. This means that the current density J of cell A is affected by a high resistivity of the porous GDC electrolyte.

In addition, the ratio of the current density measured to the current density calculated to the porous electrolyte 3 was 16.9 at 500°C, 598.8 at 600°C, 65.2 at 700°C and 914.3 at 800°C. The reason why the current density is increasingly higher from 500°C to 800°C is considered because a nanoparticle of carbon generated by the decomposition of methane gas is conveyed by a mixed gas to the porous GDC electrolyte to form an electrically conductive path of Ni-C-Cu.

On the other hand, the reason why the current density is slightly decreased at 700°C is considered because an oxide ion and carbon generated in the cathode 1 allow the reaction of the formula (8) to further progress to remove carbon. As described above, it can be presumed that the three reactions of the formulae (3), (4) and (8) occurred in the cathode 1.

### (Example 2)

Cell B shown in Table 1 was prepared in the same procedure as in Example 1 except that Cu/GDC was used for the cathode 1. Then, an experiment was performed in the same procedure as in Example 1. Herein, the X-ray diffraction pattern of the electrode (cell B) heated at 600°C to 800°C was measured, and it was confirmed that while Cu was oxidized to form CuO, two phases of CuO-GDC co-existed and there was no reactivity with each other. In addition, after cooling to 800°C, in order to reduce the Cu oxide by oxidation to Cu, a hydrogen gas containing 3% by volume of H₂O was supplied to the cathode 1 at 50 ml/min for 24 hours. The flow rate was measured at the outlet side, and it was confirmed that the flow rate of the hydrogen gas containing H₂O was 40 to 48 ml/min at 800°C and also that gas permeability was good.

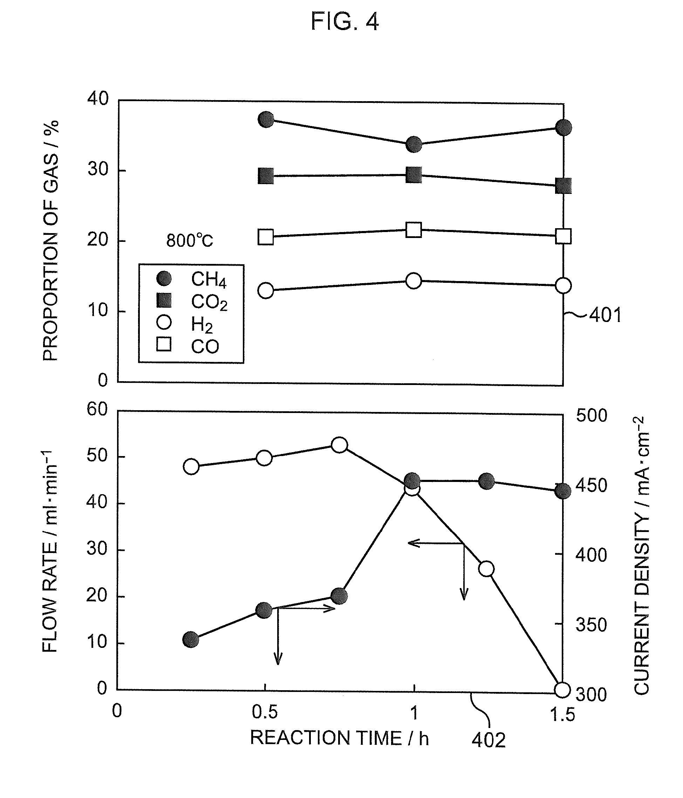

Result 401 in Fig. 4 shows the proportions of methane gas, carbon dioxide, hydrogen and carbon monoxide those passed through cell B operated at 1.1 V/cm and those were generated at 800°C. As shown in result 401 in Fig. 4, the composition of each gas at the outlet side hardly depended on the reaction time, and when the ratio of methane gas to carbon dioxide was 1 : 1 at the inlet side, the proportions of methane gas, carbon dioxide, hydrogen and carbon monoxide (% by volume) at 800°C were 36 : 29 : 14 : 21, respectively. After a reforming experiment at 800°C for 1.5 hours, no phase associated with carbon was observed in both the electrodes having a Cu catalyst. Herein, after the experiment at 800°C, GDC and Cu were identified by the X-ray diffraction pattern in the cathode 1 and the anode 2, respectively. Generation of a Cu₂O phase was not observed in the anode 2. The reason for this can be presumed because the amount of the oxide ion generated was smaller than that of Example 1.

Result 402 in Fig. 4 shows time dependences of the flow rate of a mixed gas of methane and carbon dioxide at the outlet side in reforming and the current density. Herein, in result 402 in Fig. 4, open circle symbols each show the flow rate of each gas, and solid circle symbols each show the current density. As a result, the current density was remarkably lower than the value measured in cell A. It can be thus presumed that the reaction of the formula (3) less occurred than that of Example 1.

### (Example 3)

Cell C shown in Table 1 was prepared in the same procedure as in Example 1 except that Ru/GDC was used for the cathode 1. Then, an experiment was performed in the same procedure as in Example 1. Herein, the X-ray diffraction pattern of the electrode (cell C) heated at 600°C to 800°C was measured, and it was confirmed that while Ru was oxidized to form RuO₂, two phases of RuO₂-GDC co-existed and there was no reactivity with each other. In addition, after cooling to 800°C, in order to reduce the Cu oxide by oxidation to Cu, a hydrogen gas containing 3% by volume of H₂O was supplied to the cathode 1 at 50 ml/min for 24 hours. The flow rate was measured at the outlet side, and it was confirmed that the flow rate of the hydrogen gas containing H₂O was 40 to 48 ml/min at 800°C and also that gas permeability was good.

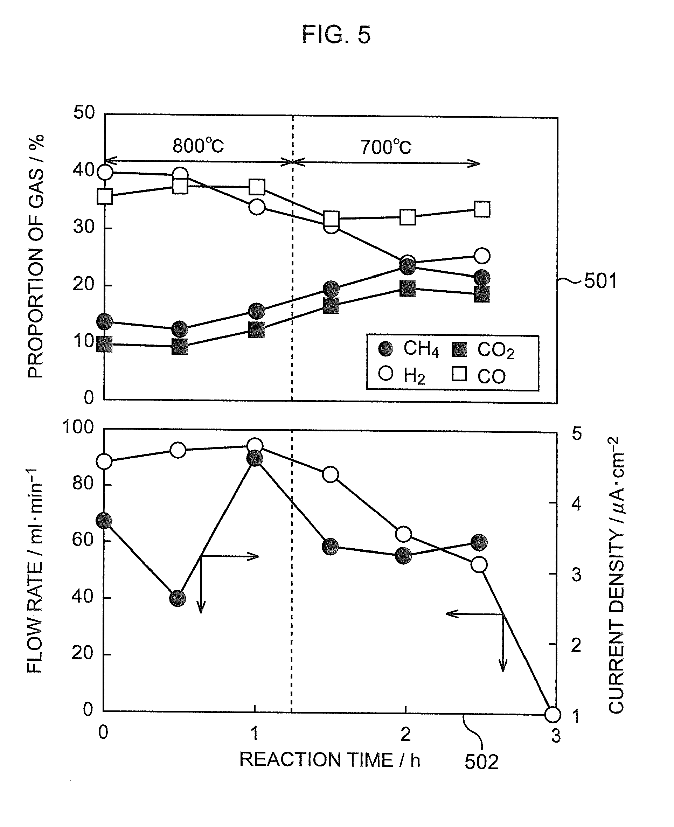

Result 501 in Fig. 5 shows the proportions of methane gas, carbon dioxide, hydrogen and carbon monoxide passing through cell C operated at 1.1 V/cm. The reaction in cell C more effectively occurred than the reaction in cell B, and when the ratio of methane gas to carbon dioxide was 1 : 1 at the inlet side, the proportions of methane gas, carbon dioxide, hydrogen and carbon monoxide (% by volume) at 800°C were 14 : 11 : 38 : 37, respectively. Thereafter, when the temperature was decreased to 700°C, the proportions of hydrogen and carbon monoxide were decreased to 27% and 33%, respectively. After the mixed gas was reacted at 700°C, the X-ray diffraction pattern of the cathode 1 was measured and Ru and GDC were identified. On the other hand, GDC, Cu and Cu₂O co-existed in the anode 2. Herein, the phase of the anode 2 was substantially the same as the phase observed in the anode 2 of cell A.

Result 502 in Fig. 5 shows time dependences of the flow rate of each gas at the outlet side and the current density. It was confirmed that while the flow rate of each gas at the outlet side was slightly decreased at 700°C, each gas smoothly flowed. In addition, it was suggested that the current density was very low and no electrically conductive path was formed between the two electrodes.

### (Comparative Example)

In Comparative Example, with respect to preparation of cell D and cell E shown in Table 1, cell D was prepared in the same procedure as in Example 3 except that Ru/GDC was used for the anode 2. Furthermore, cell E was prepared in the same procedure as in Example 1 except that SrRuO₃/GDC was used for the anode 2. Then, an experiment was performed in the same procedure as in Example 1 with respect to each cell. Herein, the X-ray diffraction patterns of the electrodes (cell D and cell E) heated at 600°C to 800°C were measured, and it was confirmed that while Ru was oxidized to form RuO₂, two phases of RuO₂-GDC co-existed and there was no reactivity with each other. With respect to cell E, it was confirmed that two phases of SrRuO₃-GDC also co-existed and there was no reactivity with each other. In addition, after cooling to 800°C, in order to reduce the Ru oxide by oxidation to Ru, a hydrogen gas containing 3% by volume of H₂O was supplied to the cathode 1 at 50 ml/min for 24 hours. The flow rate was measured at the outlet side, and it was confirmed that the flow rate of the hydrogen gas containing H₂O was 40 to 48 ml/min at 800°C and also that gas permeability was good.

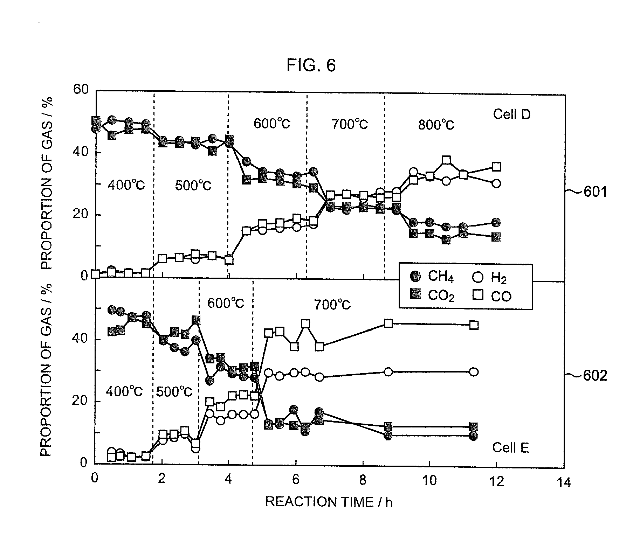

Result 601 in Fig. 6 shows the proportions of methane gas, carbon dioxide, hydrogen and carbon monoxide passing through cell D operated at 400°C to 800°C and at 1.25 V/cm. In addition, result 602 in Fig. 6 shows the proportions of methane gas, carbon dioxide, hydrogen and carbon monoxide passing through cell E operated at 400°C to 800°C and at 1.25 V/cm. As shown in result 601 in Fig. 6, when the ratio of methane gas to carbon dioxide was 1 : 1 at the inlet side in the case of cell D, the proportions of methane gas, carbon dioxide, hydrogen and carbon monoxide (% by volume) at 700°C were 23 : 23 : 27 : 27, respectively. On the other hand, as shown in result 602 in Fig. 6, when the ratio of methane gas to carbon dioxide was 1 : 1 at the inlet side in the case of cell E, the proportions of methane gas, carbon dioxide, hydrogen and carbon monoxide(% by volume) at 700°C were 13 : 13 : 30 : 43, respectively. Herein, these values are each the average value.

Table 2 below shows the composition of each gas at the outlet side, reformed at 700°C by each of cell A to cell E shown in Table 1. Herein, the results at 800°C shown in Fig. 4 are shown with respect to cell B. It was concluded that the total amount of hydrogen and carbon monoxide was increased in the following order: cell B < cell D < cell C < cell E < cell A. Even when Cu was thus used for the anode instead of Ru, a sufficiently high reforming ability was observed.

[Table 2]

**Table 2**

| Comparison of compositions of gases reformed by electrochemical cells A to E | | | | | |
|---|---|---|---|---|---|
| Electrochemical cell | Reforming temperature (°C) | Proportion of outlet gas (vol%)* | | | |
| | | CH₄ | CO₂ | H₂ | CO |
| A | 700 | 9 | 10 | 44 | 37 |
| B | 800 | 36 | 29 | 14 | 21 |
| C | 700 | 22 | 19 | 27 | 33 |
| D | 700 | 23 | 23 | 27 | 27 |
| E | 700 | 13 | 13 | 30 | 43 |

| | | | | | |
|---|---|---|---|---|---|
| *) the total amount of each gas is 99 to 101% because each number is indicated with being rounded off to the whole number. | | | | | |

### (Reference Example)

First, a Cu/GDC powder was prepared in the same procedure as in Example 1. A Cu/GDC powder having a diameter of 10 mm and a thickness of 9 mm was uniaxially pressurized at 100 MPa and isotropically pressurized at 150 MPa, and then heated in the air at 800°C for 2 hours to prepare a cell including a CuO-GDC catalyst. Then, the same experiment as in Example 1 was performed. Herein, the X-ray diffraction pattern was measured and two phases were observed. This catalyst was reduced at 800°C in a H₂ atmosphere including H₂O to be converted to a phase of Cu-GDC system.

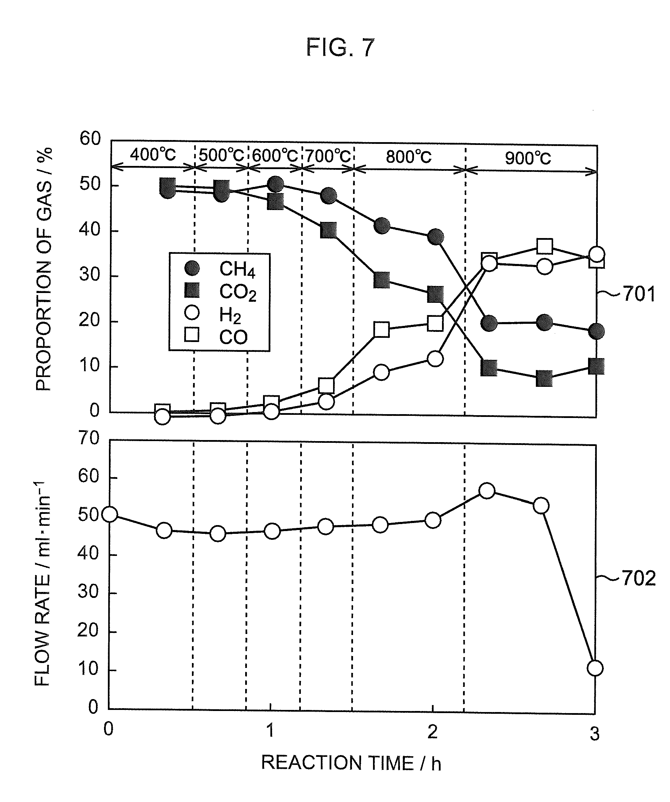

Result 701 in Fig. 7 shows the proportions of methane gas, carbon dioxide, hydrogen and carbon monoxide passing through the cell including a Cu-GDC catalyst at 400°C to 900°C. In addition, result 702 in Fig. 7 shows the change in flow rate of each gas at the outlet side at 400°C to 900°C. Herein, no external current was allowed to be supplied to this catalyst. As shown in result 701 in Fig. 7, when the ratio of methane gas to carbon dioxide was 1 : 1 at the inlet side in the case of using this catalyst, the proportions of methane gas, carbon dioxide, hydrogen and carbon monoxide (% by volume) at 900°C were 20 : 10 : 35 : 35, respectively.

As compared with the results shown in Fig. 2 and Fig. 5, it was found that electrons were supplied by an external circuit in small amounts to enhance the reactivity of methane gas with carbon dioxide. In addition, after an experiment at 900°C, the X-ray diffraction pattern was measured, and Cu and GDC were identified and no phases associated with Cu₂O and carbon were observed. It is thus considered that carbon dioxide adsorbed to Cu to generate Cu₂O according to a reaction of the following formula (10), and then methane gas adsorbed to the Cu₂O generated, to promote the oxidation of methane gas according to the reaction of the formula (7).

2Cu+CO₂ → Cu₂O+CO (10)

While suitable embodiments of the present invention are described above in detail, the present invention is not limited to such embodiments. It is clear that those skilled in the art to which the present invention belongs can conceive various modifications within the technical scope of the present invention, and it is recognized that such modifications obviously fall within the technical scope of the present invention.

### INDUSTRIAL APPLICABILITY

The present invention enables renewable energy to be converted to a fuel for a solid oxide fuel cell and the like, and can contribute to energy saving.

## Claims

1. An electrochemical reactor comprising a cathode electrode that contains nickel, copper or ruthenium, which generates carbon monoxide and an oxide ion from carbon dioxide,
a porous electrolyte that allows methane supplied toward the cathode electrode and the oxide ion generated by the cathode electrode to penetrate therethrough, and
an anode electrode that contains copper, which generates hydrogen and carbon monoxide from the methane and the oxide ion having penetrated through the electrolyte.

2. The electrochemical reactor according to claim 1 constituted by a cell that comprises three layers of the cathode electrode, the electrolyte and the anode electrode, each per layer.

3. The electrochemical reactor according to claim 1 or 2, wherein the electrolyte comprises gadolinium-doped ceria.

4. The electrochemical reactor according to any one of claims 1 to 3, wherein the cathode electrode comprises nickel, copper or ruthenium, and gadolinium-doped ceria.

5. The electrochemical reactor according to any one of claims 1 to 4, wherein the anode electrode comprises copper and gadolinium-doped ceria.

6. A method for producing a fuel gas by using an electrochemical reactor comprising a cathode electrode that contains nickel, copper or ruthenium, which generates carbon monoxide and an oxide ion from carbon dioxide, a porous electrolyte that allows methane supplied toward the cathode electrode and the oxide ion generated by the cathode electrode to penetrate therethrough, and an anode electrode that contains copper, which generates hydrogen and carbon monoxide from the methane and the oxide ion having penetrated through the electrolyte, the method comprising
a step of applying a voltage between the anode electrode and the cathode electrode, and
a step of supplying a gas comprising the methane and the carbon dioxide toward the cathode electrode.
